(19) Europäisches Patentamt / European Patent Office / Office européen des brevets

(11) **EP 4 654 734 A1**

(12) **EUROPEAN PATENT APPLICATION**
published in accordance with Art. 153(4) EPC

(43) Date of publication:
26.11.2025 Bulletin 2025/48

(21) Application number: 24755923.0

(22) Date of filing: 24.01.2024

(51) International Patent Classification (IPC):
*H04W 76/10* (2018.01)

(52) Cooperative Patent Classification (CPC):
H04L 5/00; H04W 74/0833; H04W 76/10;
H04W 76/27; Y02D 30/70

(86) International application number:
PCT/CN2024/073851

(87) International publication number:
WO 2024/169548 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.02.2023 CN 202310148834

(71) Applicant: Huawei Technologies Co., Ltd.
Shenzhen, Guangdong 518129 (CN)

(72) Inventors:
• JIAO, Minghan
Shenzhen, Guangdong 518129 (CN)

• LI, Ruijie
Shenzhen, Guangdong 518129 (CN)
• GUAN, Lei
Shenzhen, Guangdong 518129 (CN)
• ZOU, Zhiqiang
Shenzhen, Guangdong 518129 (CN)
• ZHANG, Jingjing
Shenzhen, Guangdong 518129 (CN)
• WU, Yaqi
Shenzhen, Guangdong 518129 (CN)
• WANG, Jinglun
Shenzhen, Guangdong 518129 (CN)

(74) Representative: Epping - Hermann - Fischer
Patentanwaltsgesellschaft mbH
Schloßschmidstraße 5
80639 München (DE)

(54) **WAKE-UP METHOD, APPARATUS AND SYSTEM**

(57) This application provides a wake-up method, an apparatus, and a system. The wake-up method is applicable to a multi-site shutdown scenario. The wake-up method includes: A terminal sends a wake-up signal to a cell to wake up the cell, for example, establishes a connection to the cell. In this way, the terminal completes a subsequent access process, and communicates with the cell, to avoid failure of the cell to communicate with the terminal in time after the cell enters a dormant state. The method can improve communication reliability, further improve access efficiency, and shorten an access latency.

```
┌─────────────────────────┐
│ S210: A terminal receives│
│ first information from a │
│          first cell      │
└─────────────────────────┘
            │
┌─────────────────────────┐
│ S220: The terminal sends │
│  a first signal on a first│
│          resource        │
└─────────────────────────┘
            │
┌ ─ ─ ─ ─ ─ ─ ─ ─ ─ ─ ─ ─ ┐
  S230: The terminal sends
│  a first random access   │
   signal to a second cell
└ ─ ─ ─ ─ ─ ─ ─ ─ ─ ─ ─ ─ ┘
```

FIG. 2

## Description

This application claims priority to Chinese Patent Application No. 202310148834.6, filed with the China National Intellectual Property Administration on February 13, 2023 and entitled "WAKE-UP METHOD, APPARATUS, AND SYSTEM", which is incorporated herein by reference in its entirety.

## TECHNICAL FIELD

This application relates to the communication field, and in particular, to a wake-up method, an apparatus, and a system.

## BACKGROUND

With development of communication technologies, a network transmission bandwidth is increasingly large. Consequently, a transmit power of a network device is also increasingly large. In addition, an increase in transmission paths of the network device causes an increase in static power consumption of a system. Energy saving of the network device becomes a research focus. In a possible manner, a network device 1 performs determining based on actual load, and may actively turn off some components if no data is transmitted within a period of time, to reduce power consumption. In this case, users in a coverage area of the network device 1 may access a normally enabled network device 2 in a unified manner, and the network device 2 may provide basic functions such as cell access and control information transmission.

However, when network load increases, some network devices that have turned off components need to be re-enabled and provide data transmission services for users. In conventional technologies, when accessing a network, a terminal apparatus needs to first detect a synchronization signal and physical broadcast channel (physical broadcast channel, PBCH) block (synchronization signal and PBCH block, SSB) and a system message block (system information block, SIB), and perform initial access (or uplink synchronization) based on indication information in the synchronization signal and physical broadcast channel block and the system message block.

However, a base station that has turned off a component may maintain only basic synchronization signal sending, or even send no signal. In this case, the terminal apparatus cannot establish a connection to the network device, affecting communication quality.

## SUMMARY

This application provides a wake-up method, an apparatus, and a system. The method can improve communication reliability.

According to a first aspect, a wake-up method is provided. The method may be performed by a terminal, or may be performed by a chip or a circuit used in the terminal. For ease of description, the following uses an example in which the method is performed by the terminal for description. The method may include: The terminal receives first information from a first cell, where the first information includes configuration information of a first resource, the first resource is used to send a first signal, and the first signal is used by the terminal to establish a connection to a second cell. The terminal sends the first signal on the first resource.

In an optional manner, the first cell may be a control station, and the second cell may be a data station in a dormant state.

That the terminal establishes the connection to the second cell may be: The terminal wakes up the second cell from the dormant state. For example, the second cell changes from the dormant state to an active state (or referred to as a working state). For example, the second cell sends information to the terminal. For example, the second cell is triggered to send fourth information. It may indicate that a status of the second cell is the active state, and may also indicate that the second cell establishes the connection to the terminal.

In the foregoing technical solution, the terminal can actively wake up a cell (that is, the second cell) in the dormant state, to communicate with the cell and avoid failure of the cell to communicate with an apparatus in time after the cell enters the dormant state. For example, the solution is applicable to a random access process. After a cell enters the dormant state, the terminal wakes up the cell in time to access the cell for communication. This improves communication reliability. In a possible implementation, the first information includes configuration information of a resource in a first resource set, the first resource set includes N resources, the N resources are in one-to-one correspondence with N cells, the N cells include the second cell, the first resource is a resource that is in the first resource set and that corresponds to the second cell, and N is a positive integer greater than or equal to 1.

In other words, the first information includes configuration information of the N resources. The first resource is a resource in the N resources. In other words, the first resource is a resource determined from the N resources.

In this manner, a resource of the first signal is configured per cell (per cell). In this way, when learning of information about a to-be-woken-up cell (for example, receiving an identifier of the cell), a network device may directly send wake-up information on a resource corresponding to the cell. This improves communication efficiency and reduces sending overheads of the terminal device.

In a possible implementation, the terminal receives second information from the second cell, where the second information includes an identifier of the second cell. The terminal determines the first resource from the first resource set based on the identifier of the second cell.

In a possible implementation, a reference signal received power RSRP of a first reference signal is less than or equal to a first threshold, the first reference signal indicates a second resource, the second resource is used for transmission of the first information, and the first reference signal is from the first cell.

In this manner, when the RSRP of the first reference signal of the first cell is low, in other words, signal received quality of the first cell is poor, the terminal may access the second cell, to improve the communication efficiency.

In a possible implementation, a first path loss is greater than a second path loss, the first path loss is obtained through measurement of a first reference signal, the second path loss is obtained through measurement of a second reference signal, the second reference signal includes the second information, the second information includes the identifier of the second cell, and the second reference signal is from the second cell.

In this manner, a path loss of the first cell is greater than a path loss of the second cell, and the terminal may select a cell with a smaller path loss for access. In this way, the terminal selects a cell with better channel quality for communication, so that the communication efficiency can be improved.

A first transmit power is greater than a second transmit power, the first transmit power is a PRACH transmit power value that is of the terminal and that corresponds to the first cell, and the second transmit power is a PRACH transmit power value that is of the terminal and that corresponds to the second cell.

In this manner, the terminal selects a cell having a low transmit power requirement for access, so that power consumption of the terminal can be reduced.

In other words, the terminal sends the first signal when determining that at least one of the following is met: The RSRP of the first reference signal is less than or equal to the first threshold, the first reference signal indicates the second resource, the second resource is used for transmission of the first information, and the first reference signal is from the first cell; or the first path loss is greater than the second path loss, the first path loss is obtained through measurement of the first reference signal, the second path loss is obtained through measurement of the second reference signal, the second reference signal includes the second information, the second information includes the identifier of the second cell, and the second reference signal is from the second cell; or the first transmit power is greater than the second transmit power, the first transmit power is the PRACH transmit power value that is of the terminal and that corresponds to the first cell, and the second transmit power is the PRACH transmit power value that is of the terminal and that corresponds to the second cell.

In a possible implementation, sending the first signal on the first resource includes: sending the first signal on each of the N resources, where the N resources include the first resource, and the N resources are in one-to-one correspondence with the N cells.

In this manner, when the terminal cannot determine the second cell, for example, when the terminal obtains no identifier of the second cell, in other words, the terminal receives no second information, and therefore cannot determine the first resource, the terminal may send the first signal on all the N resources.

In a possible implementation, the terminal receives M reference signals from M cells, where the M reference signals include the second reference signal, the second reference signal includes the second information, the second information includes the identifier of the second cell, and the second reference signal is from the second cell.

In a possible implementation, the second cell satisfies at least one of the following: The second cell is a cell with a largest RSRP in the M cells; or the second cell is a cell with a smallest path loss obtained through reference signal measurement in the M cells; or the second cell is a cell with a smallest corresponding random access transmit power in the M cells; or the second cell is a cell whose RSRP is greater than or equal to a second threshold in the M cells; or the second cell is a cell corresponding to a reference signal first received by the terminal, where the M cells are cells in the N cells.

This solution provides a plurality of manners of determining the second cell. The terminal determines the second cell based on factors such as a reference signal received power, a path loss, a random access transmit power, or a speed of receiving a reference signal, and can select a cell having a good communication condition as the second cell, to complete a subsequent access process. This helps improve transmission reliability, further improve access efficiency, and shorten an access latency.

In a possible implementation, the terminal receives the first reference signal from the first cell, where the first reference signal indicates the second resource, and the second resource is used for transmission of the first information. The terminal receives a third reference signal from the first cell, where the third reference signal indicates a third resource, the third resource is used for transmission of third information, the third information includes configuration information of a fourth resource, the fourth resource is used for transmission of a second signal, and the second signal and the first signal are of a same type. An index of the third reference signal is different from an index of the first reference signal, and the first resource is the same as or different from the fourth resource.

It should be understood that the second signal and the first signal are of the same type. For example, the first signal is a wake-up signal, and the second signal is also a wake-up signal. In other words, the fourth resource may alternatively be used for transmission of a wake-up signal. The wake-up signal may be the same as or different from the first signal. For example, the first signal and the second signal both are used to wake up the second cell, or the first signal and the second signal are respectively used to wake up different cells. This is not limited in this application.

That the index of the third reference signal is different from the index of the first reference signal may also be understood as: A direction of a beam used to send the first reference signal is different from a direction of a beam used to send the third reference signal.

It should be understood that, to ensure that all cells in a dormant state in an area can be woken up, the first information needs to carry resource configuration information for transmission of the first signal by all the cells in a dormant state in the area. In the foregoing solution, all the cells in a dormant state in the area may be divided into a plurality of groups based on reference signals (beam directions), and first information corresponding to each reference signal may carry only configuration information of a cell in a corresponding beam direction (namely, a coverage direction of the beam). This reduces configuration overheads of configuration information of the first cell. In addition, when actually sending the first signal, for a branch at which the second reference signal is not received, the terminal may send the wake-up signal only to a cell in a dormant state in a specific beam direction. This reduces the sending overheads of the terminal. When the first information is the same as the third information, different reference signals indicate same resource configuration information. When the first information is different from the third information, different reference signals indicate different resource configuration information.

In a possible implementation, the first resource belongs to the first resource set, the fourth resource belongs to a second resource set, and the first resource set is the same as or different from the second resource set.

In a possible implementation, a transmit power of the first signal is a maximum transmit power of the terminal;
or

a transmit power of the first signal satisfies the following formula:

$$P=\min\{P_{CMAX}, P1+PL+(N1-1)\Delta_{Step}\},$$

where
$P_{CMAX}$ is a maximum transmit power of the terminal;
P1 is a first preset power, where the first preset power is a target power that is of the first signal and that is expected by the second cell;
PL is the first path loss, and is obtained through measurement of the second reference signal, where the second reference signal is from the second cell;
N1 is a quantity of transmissions, and the quantity of transmissions is a quantity of times that the terminal sends the first signal; and
$\Delta_{Step}$ is a first power ramp step, and the first power ramp step is an increment at each power change.

In a possible implementation, the first reference signal is a synchronization signal block SSB or a discovery reference signal DRS.

In a possible implementation, the second reference signal is a synchronization signal block SSB or a discovery reference signal DRS.

For example, the first reference signal is an SSB, and the second reference signal is an SSB; or the first reference signal is a DRS, and the second reference signal is an SSB; or the first reference signal is an SSB, and the second reference signal is a DRS; or the first reference signal is a DRS, and the second reference signal is a DRS.

In a possible implementation, that the first signal is used by the terminal to establish the connection to the second cell includes: The first signal is used to trigger the second cell to send the fourth information.

When the first signal is a wake-up signal WUS, the fourth information is a system information block SIB1.

Alternatively, when the first signal is a random access channel RACH, the fourth information is a random access response RAR.

In other words, the WUS triggers the second cell to send the SIB1, and the RACH triggers the second cell to send the RAR. Sending the SIB1 or sending the RAR by the second cell may be used as an example in which the terminal establishes the connection to the second cell, or an example in which the second cell is woken up.

In a possible implementation, the first resource is a communication resource of the terminal in the first cell, or the first resource is a communication resource of the terminal in the second cell. Optionally, when the first resource is a communication resource of the terminal in the second cell, the second cell receives the first signal.

Optionally, when the first resource is a communication resource of the terminal in the first cell, the first cell receives the first signal, and the first cell wakes up the second cell. In this case, the second cell does not receive the first signal, so that power consumption of the second cell can be further reduced.

According to a second aspect, a wake-up method is provided. The method may be performed by a network device, or may be performed by a chip or a circuit used in the network device. For ease of description, the following uses an example in which the method is performed by a first network device for description. The method may include: The first network device determines a first resource. The first network device sends, in a first cell, first information to a terminal, where the first information includes configuration information of the first resource, the first resource is used to send a first signal, and the first signal is used by the terminal to establish a connection to a second cell.

In a possible implementation, the first information includes configuration information of a resource in a first resource set, the first resource set includes N resources, the N resources are in one-to-one correspondence with N cells, the N cells include the second cell, the first resource is a resource that is in the first resource set and that corresponds to the second cell, and N is a positive integer greater than or equal to 1.

In a possible implementation, the first network device sends a first reference signal to the terminal, where the first reference signal indicates a second resource, and the second resource is used for transmission of the first information. The first network device sends a third reference signal to the terminal, where the third reference signal indicates a third resource, the third resource is used for transmission of third information, the third information includes configuration information of a fourth resource, the fourth resource is used for transmission of a second signal, and the second signal and the first signal are of a same type. An index of the third reference signal is different from an index of the first reference signal, and the first resource is the same as or different from the fourth resource.

In a possible implementation, the first resource belongs to the first resource set, the third resource belongs to a second resource set, and the first resource set is different from the second resource set.

In a possible implementation, the first reference signal is a synchronization signal block SSB or a discovery reference signal DRS.

In a possible implementation, the first resource is a communication resource of the terminal in the first cell, or the first resource is a communication resource of the terminal in the second cell.

In a possible implementation, the first signal is a wake-up signal WUS or a random access channel RACH.

It should be understood that the second aspect is an implementation on the first cell side corresponding to the first aspect, and explanations, descriptions, and descriptions of beneficial effects of the first aspect are also applicable to the second aspect. Details are not described again. According to a third aspect, a wake-up method is provided. The method may be performed by a network device, or may be performed by a chip or a circuit used in the network device. For ease of description, the following uses an example in which the method is performed by a second network device for description. The method may include: The second network device receives a first signal on a first resource. The second network device establishes a connection to a terminal based on the first signal.

In a possible implementation, the first resource is a communication resource of the terminal in a first cell, or the first resource is a communication resource of the terminal in a second cell.

In a possible implementation, the network device sends second information, where the second information includes an identifier of the second cell, and the identifier of the second cell indicates the first resource.

In a possible implementation, the network device sends a second reference signal, where the second reference signal includes the second information.

In a possible implementation, the first signal is a wake-up signal WUS or a random access channel RACH, and establishing the connection to the terminal based on the first signal includes: sending fourth information to the terminal.

When the first signal is a WUS, the fourth information is system information.

Alternatively, when the first signal is a RACH, the fourth information is a random access response RAR.

It should be understood that the third aspect is an implementation on the second cell side corresponding to the first aspect, and explanations, descriptions, and descriptions of beneficial effects of the first aspect are also applicable to the third aspect. Details are not described again.

According to a fourth aspect, a communication apparatus is provided. The communication apparatus includes a transceiver module. The transceiver module is configured to receive first information from a first cell, where the first information includes configuration information of a first resource, the first resource is used to send a first signal, and the first signal is used by a terminal to establish a connection to a second cell. The transceiver module is further configured to send the first signal on the first resource.

In a possible implementation, the first information includes configuration information of a resource in a first resource set, the first resource set includes N resources, the N resources are in one-to-one correspondence with N cells, the N cells include the second cell, the first resource is a resource that is in the first resource set and that corresponds to the second cell, and N is a positive integer greater than or equal to 1.

In a possible implementation, the transceiver module is further configured to receive second information from the second cell, where the second information includes an identifier of the second cell. The communication apparatus further includes a processing module. The processing module is configured to determine the first resource from the first resource set based on the identifier of the second cell.

In a possible implementation, a reference signal received power RSRP of a first reference signal is less than or equal to a first threshold, the first reference signal indicates a second resource, the second resource is used for transmission of the first information, and the first reference signal is from the first cell. Alternatively, a first path loss is greater than a second path loss, the first path loss is obtained through measurement of a first reference signal, the second path loss is obtained through measurement of a second reference signal, the second reference signal includes the second information, the second information includes the identifier of the second cell, and the second reference signal is from the second cell. Alternatively, a first transmit power is greater than a second transmit power, the first transmit power is a PRACH transmit power value that is of the terminal and that corresponds to the first cell, and the second transmit power is a PRACH transmit power value that is of the terminal and that corresponds to the second cell.

In a possible implementation, the transceiver module is configured to send the first signal on each of the N resources, where the N resources include the first resource, and the N resources are in one-to-one correspondence with the N cells.

In a possible implementation, the transceiver module is further configured to receive M reference signals from M cells, where the M reference signals include the second reference signal, the second reference signal includes the identifier of the second cell, and the second reference signal is from the second cell.

In a possible implementation, the second cell satisfies at least one of the following:

The second cell is a cell with a largest reference signal received power RSRP in the M cells; or the second cell is a cell with a smallest path loss obtained through reference signal measurement in the M cells; or the second cell is a cell with a smallest corresponding random access transmit power in the M cells; or the second cell is a cell whose RSRP is greater than or equal to a second threshold in the M cells; or the second cell is a cell corresponding to a reference signal first received by the terminal, where the M cells are cells in the N cells.

In a possible implementation, the transceiver module is further configured to receive the first reference signal from the first cell, where the first reference signal indicates the second resource, and the second resource is used for transmission of the first information. The transceiver module is further configured to receive a third reference signal from the first cell, where the third reference signal indicates a third resource, the third resource is used for transmission of third information, the third information includes configuration information of a fourth resource, the fourth resource is used for transmission of a second signal, and the second signal and the first signal are of a same type. An index of the third reference signal is different from an index of the first reference signal, and the first resource is the same as or different from the fourth resource.

In a possible implementation, the first resource belongs to the first resource set, the fourth resource belongs to a second resource set, and the first resource set is the same as or different from the second resource set.

In a possible implementation, a transmit power of the first signal is a maximum transmit power of the terminal;

or

a transmit power of the first signal satisfies the following formula:

$$P=\min\{P_{CMAX}, P1+PL+(N1-1)\Delta_{Step}\},$$

where

$P_{CMAX}$ is a maximum transmit power of the terminal;

P1 is a first preset power, where the first preset power is a target power that is of the first signal and that is expected by the second cell;

PL is the first path loss, and is obtained through measurement of the second reference signal, where the second reference signal is from the second cell;

N1 is a quantity of transmissions, and the quantity of transmissions is a quantity of times that the terminal sends the first signal; and

$\Delta_{Step}$ is a first power ramp step, and the first power ramp step is an increment at each power change.

In a possible implementation, the first reference signal is a synchronization signal block SSB or a discovery reference signal DRS.

In a possible implementation, that the first signal is used by the terminal to establish the connection to the second cell includes: The first signal is used to trigger a second network device to send fourth information in the second cell.

When the first signal is a wake-up signal WUS, the fourth information is a system information block SIB1. Alternatively, when the first signal is a random access channel RACH, the fourth information is a random access response RAR.

In a possible implementation, the first resource is a communication resource of the terminal in the first cell, or the first resource is a communication resource of the terminal in the second cell.

It should be understood that the fourth aspect is an apparatus-side implementation corresponding to the first aspect, and explanations, descriptions, and beneficial effects of the first aspect are applicable to the fourth aspect. Details are not described again.

According to a fifth aspect, a communication apparatus is provided. The communication apparatus includes a transceiver module and a processing module. The processing module is configured to determine a first resource. The transceiver module is configured to send first information to a terminal, where the first information includes configuration information of the first resource, the first resource is used to send a first signal, and the first signal is used by the terminal to establish a connection to a second cell.

In a possible implementation, the first information includes configuration information of a resource in a first resource set, the first resource set includes N resources, the N resources are in one-to-one correspondence with N cells, the N cells include the second cell, the first resource is a resource that is in the first resource set and that corresponds to the second cell, and N is a positive integer greater than or equal to 1.

In a possible implementation, the receiver module is further configured to send a first reference signal to the terminal, where the first reference signal indicates a second resource, and the second resource is used for transmission of the first information. The transceiver module is further configured to send a third reference signal to the terminal, where the third reference signal indicates a third resource, the third resource is used for transmission of third information, the third information includes configuration information of a fourth resource, the fourth resource is used for transmission of a second signal, and the second signal and the first signal are of a same type.

An index of the third reference signal is different from an index of the first reference signal, and the first resource is the same as or different from the fourth resource.

In a possible implementation, the first resource belongs to the first resource set, the third resource belongs to a second resource set, and the first resource set is the same as or different from the second resource set.

In a possible implementation, the first reference signal is a synchronization signal block SSB or a discovery reference signal DRS.

In a possible implementation, the first resource is a communication resource of the terminal in a first cell, or the first resource is a communication resource of the terminal in the second cell.

In a possible implementation, the first signal is a wake-up signal WUS or a random access channel RACH.

It should be understood that the fifth aspect is an apparatus-side implementation corresponding to the second aspect, and explanations, descriptions, and beneficial effects of the second aspect are applicable to the fifth aspect. Details are not described again.

According to a sixth aspect, a communication apparatus is provided. The communication apparatus includes a transceiver module and a processing module. The transceiver module is configured to receive a first signal on a first resource. The processing module is configured to establish a connection to a terminal based on the first signal.

In a possible implementation, the transceiver module is configured to send second information, where the second information includes an identifier of a second cell, and the identifier of the second cell indicates the first resource.

In a possible implementation, the first resource is a communication resource of the terminal in a first cell, or the first resource is a communication resource of the terminal in the second cell.

In a possible implementation, the transceiver module is further configured to send a second reference signal, where the second reference signal indicates that the second information is included.

In a possible implementation, the first signal is a wake-up signal WUS or a random access channel RACH, and that the processing module establishes the connection to the terminal based on the first signal includes:

The transceiver module sends fourth information to the terminal.

When the first signal is a WUS, the fourth information is system information.

Alternatively, when the first signal is a RACH, the fourth information is a random access response RAR.

It should be understood that the sixth aspect is an apparatus-side implementation corresponding to the third aspect, and explanations, descriptions, and beneficial effects of the third aspect are applicable to the sixth aspect. Details are not described again.

According to a seventh aspect, an embodiment of this application provides a communication apparatus, including an interface circuit and a processor. The interface circuit is configured to implement a function of the transceiver module in the fourth aspect, and the processor is configured to implement a function of the processing module in the fourth aspect.

According to an eighth aspect, an embodiment of this application provides a communication apparatus, including an interface circuit and a processor. The interface circuit is configured to implement a function of the transceiver module in the fourth aspect, and the processor is configured to implement a function of the processing module in the fifth aspect or the sixth aspect. According to a ninth aspect, an embodiment of this application provides a computer-readable medium. The computer-readable medium stores program code to be executed by a terminal device, and the program code includes instructions used to perform the method in the first aspect, any one of the possible manners of the first aspect, or all the possible manners of the first aspect.

According to a tenth aspect, an embodiment of this application provides a computer-readable medium. The computer-readable medium stores program code to be executed by a network device, and the program code includes instructions used to perform the method in the second aspect or the third aspect, any one of the possible manners of the second aspect or the third aspect, or all the possible manners of the second aspect or the third aspect.

According to an eleventh aspect, a computer program product storing computer-readable instructions is provided. When the computer-readable instructions are run on a computer, the computer is caused to perform the method in the first aspect, any one of the possible manners of the first aspect, or all the possible manners of the first aspect.

According to a twelfth aspect, a computer program product storing computer-readable instructions is provided. When the computer-readable instructions are run on a computer, the computer is caused to perform the method in the second aspect or the third aspect, any one of the possible manners of the second aspect or the third aspect, or all the possible manners of the second aspect or the third aspect.

According to a thirteenth aspect, a communication system is provided. The communication system includes an apparatus that has a function of implementing the method or various possible designs in the first aspect, the second aspect, or the third aspect, any one of the possible manners of the first aspect, the second aspect, or the third aspect, or all the possible manners of the first aspect, the second aspect, or the third aspect.

According to a fourteenth aspect, a processor is provided. The processor is configured to be coupled to a memory, and is configured to perform the method in the first aspect, any one of the possible manners of the first aspect, or all the possible manners of the first aspect.

According to a fifteenth aspect, a processor is provided. The processor is configured to be coupled to a memory, and is configured to perform the method in the second aspect or the third aspect, any one of the possible manners of the second aspect or the third aspect, or all the possible manners of the second aspect or the third aspect.

According to a sixteenth aspect, a chip system is provided. The chip system includes a processor, and may further include a memory. The processor is configured to execute a computer program or instructions stored in the memory, to enable the chip system to implement the method in any one of the first aspect, the second aspect, or the third aspect, or the possible implementations of the first aspect, the second aspect, or the third aspect. The chip system may include a chip, or may include a chip and another discrete component.

According to a seventeenth aspect, a computer program product storing computer-readable instructions is provided. When the computer-readable instructions are run on a computer, the computer is caused to perform the method in the first aspect, any one of the possible manners of the first aspect, or all the possible manners of the first aspect.

According to an eighteenth aspect, a computer program product storing computer-readable instructions is provided. When the computer-readable instructions are run on a computer, the computer is caused to perform the method in the second aspect or the third aspect, any one of the possible manners of the second aspect or the third aspect, or all the possible manners of the second aspect or the third aspect.

According to a nineteenth aspect, a communication system is provided, and includes at least one communication apparatus according to the fourth aspect, at least one communication apparatus according to the fifth aspect, and/or at least one communication apparatus according to the fifth aspect. The communication system is configured to implement the method in the first aspect, the second aspect, or the third aspect, any one of the possible manners of the first aspect, the second aspect, or the third aspect, or all the possible implementations of the first aspect, the second aspect, or the third aspect.

According to a twentieth aspect, a communication method is provided. The method includes: A first network device sends, in a first cell, first information to a terminal. Correspondingly, the terminal receives the first information in the first cell. The first information includes configuration information of a first resource, the first resource is used to send a first signal, and the first signal is used by the terminal apparatus to establish a connection to a second cell. The terminal sends the first signal on the first resource. Correspondingly, a second network device receives the first signal in the second cell, and the second network device establishes the connection to the terminal based on the first signal.

**BRIEF DESCRIPTION OF DRAWINGS**

FIG. 1 shows a communication system to which this application is applicable;
FIG. 2 is a diagram of a wake-up method according to this application;
FIG. 3 is a diagram of a wake-up method according to this application;
FIG. 4 is a diagram of resource allocation according to this application;
FIG. 5 is a schematic flowchart of sending a first signal by a terminal apparatus according to this application;
FIG. 6 is another diagram of a wake-up method according to this application;
FIG. 7 is another schematic flowchart of sending a first signal by a terminal apparatus according to this application;
FIG. 8 is a diagram of a relationship between a first cell and a second cell according to this application;
FIG. 9 is another diagram of a relationship between a first cell and a second cell according to this application;
FIG. 10 is a schematic flowchart of a wake-up method according to this application;
FIG. 11 is another schematic flowchart of a wake-up method according to this application;
FIG. 12 is a block diagram of a communication apparatus according to this application; and
FIG. 13 is another block diagram of a communication apparatus according to this application.

**DESCRIPTION OF EMBODIMENTS**

The following describes technical solutions in embodiments of this application with reference to accompanying drawings.

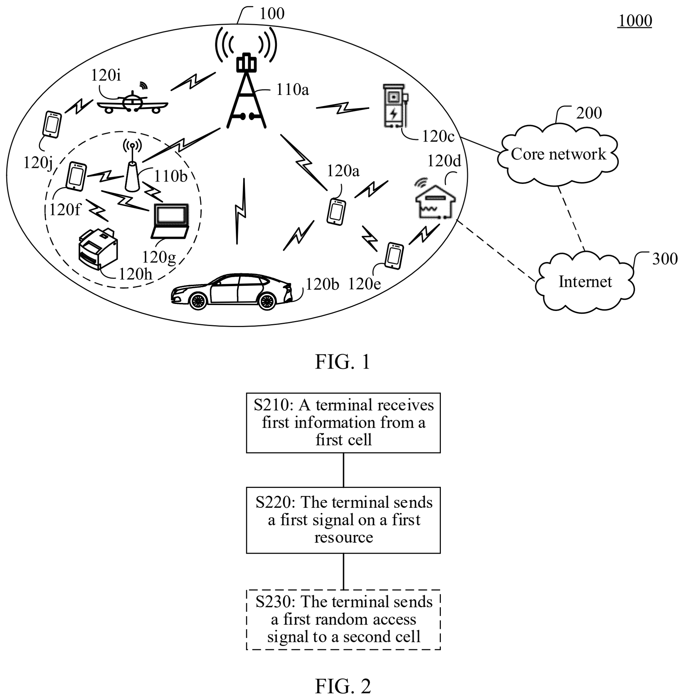

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the network device is a radio access network device.

A terminal apparatus may also be referred to as a terminal, a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application. For ease of description, the following uses an example in which the terminal is used as a terminal apparatus for description. The network device and the terminal may be at a fixed position or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application. Roles of the network device and the terminal may be relative. For example, a helicopter or an uncrewed aerial vehicle 120i in FIG. 1 may be configured as a mobile network device. For the terminal device 120j that accesses the radio access network 100 via 120i, the terminal 120i is a network device. However, for the network device 110a, 120i is a terminal, that is, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between a network device and a terminal, between network devices, or between terminals may be performed through a licensed spectrum, may be performed through an unlicensed spectrum, may be performed through both a licensed spectrum and an unlicensed spectrum, may be performed through a spectrum of 6 gigahertz (gigahertz, GHz) or below, may be performed through a spectrum of 6 GHz or above, or may be performed through both a spectrum of 6 GHz or below and a spectrum of 6 GHz or above. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the terminal may be performed by a module (for example, a chip or a modem) in the terminal, or may be performed by an apparatus including the function of the terminal.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be referred to as "communication" for short, and the term "communication" may also be described as "data transmission", "information transmission", or "transmission".

It may be understood that, in embodiments of this application, a physical uplink shared channel (physical downlink shared channel, PDSCH), a physical downlink control channel (physical downlink control channel, PDCCH), and a physical uplink shared channel (physical uplink shared channel, PUSCH) are merely respectively used as examples of a downlink data channel, a downlink control channel, and an uplink data channel. In different systems and different scenarios, a data channel and a control channel may have different names. This is not limited in embodiments of this application.

For ease of understanding the solutions of this application, related concepts are explained in advance.

1. Time-frequency resource: The time-frequency resource includes at least one of a time domain resource and a frequency domain resource.

The time domain resource may include one or more time units. The time unit may be one or more symbols, one or more slots (slot), one or more mini-slots (mini-slot), one or more subframes, one or more frames, or the like. The one or more time units may be consecutive or discrete in terms of time. It should be understood that time domain units in one resource pool are logically consecutive. One radio frame may include a plurality of subframes, one subframe may include one or more slots, and one slot may include at least one symbol (symbol). Alternatively, one radio frame may include a plurality of slots, and one slot may include at least one symbol. In this application, for understanding of definitions of a symbol, a mini-slot, a slot, a subframe, and a frame, refer to 3GPP TS 38.211.

The frequency domain resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like.

2. Reference signal: The reference signal is a known signal provided by a transmit end for a receive end for channel estimation or channel sounding. In embodiments of this application, the reference signal may be used for channel measurement, interference measurement, and the like, for example, measuring parameters such as reference signal received quality (reference signal received quality, RSRQ), a signal to interference plus noise ratio (signal to interference plus noise ratio, SINR), a channel quality indication (channel quality indication, CQI), and/or a precoding matrix indication (precoding matrix Indication, PMI). The reference signal in this application may be an SSB or a discovery reference signal (discovery reference signal, DRS). It should be understood that the foregoing enumerated specific examples of the sequence signal are merely examples for description, and this application is not limited thereto.

3. Path loss (Path loss): The path loss is also referred to as a propagation loss, is a loss generated when an electric wave is propagated in space, is caused by radiation diffusion of a transmit power and a propagation feature of a channel, and reflects channel quality of signal propagation.

4. Synchronization signal and physical broadcast channel block (synchronization signal and physical broadcast channel block, SSB): The SSB includes a primary synchronization signal (primary synchronization signal, PSS), a secondary synchronization signal (secondary synchronization signal, SSS), and a physical broadcast channel (physical broadcast channel, PBCH). The SSB is mainly used for cell search, cell synchronization, cell identity (cell identity number, CI) carrying, downlink timing, and system message obtaining. The SSB mainly has two functions: (1) cell synchronization and master system information block (master information block, MIB) obtaining; and (2) training of a transmit beam (beam) of the network device.

Specifically, for the cell synchronization and MIB obtaining, the PSS and the SSS carry a physical cell identifier (physical cell identifier, PCI), and the terminal obtains the PCI by detecting the PSS and the SSS. Different SSBs in one cell are identified by SSB indexes (index), and the SSB index is carried in the PBCH of the SSB. Each SSB index corresponds to a sending position. The terminal completes downlink timing synchronization by detecting the SSB index and a detection moment.

5. System information block (system information block, SIB)

A system information element is broadcast via the system information block. System information elements of a same type are combined in system information. System information includes a MIB and a system information block (system information block, SIB). The SIB includes a SIB 1, a SIB2, and the like. System information blocks other than the SIB1 may be referred to as other system information blocks (other system information blocks, other SIBs) for short. A main function of the SIB1 is to complete a configuration on a primary cell (primary cell, PCell), so that a terminal in an idle (idle) state monitors a paging message, or the terminal completes uplink timing synchronization through random access, to enter a connected (connected) state.

6. Cell: The cell is a logical entity. Each cell has one cell ID. One cell may include a downlink carrier and/or an uplink carrier. The terminal may access the cell, and perform transmission of uplink information on the uplink carrier of the cell, and/or perform transmission of downlink information on the downlink carrier of the cell.

An active-state cell is also referred to as a working-state cell, to be specific, a cell that can establish a communication connection to a communication apparatus like the terminal. Establishing the communication connection includes sending/receiving one or more of the following groups of channels:

A first group of channels include at least one of the following signals/channels: a physical downlink control channel PDCCH scrambled by a system message-radio network temporary identity (system information-radio network temporary identity, SI-RNTI), a physical random access channel PRACH, a PDCCH scrambled by a random access-radio network temporary identity (random access-radio network temporary identity, RA-RNTI), or a PDCCH scrambled by a temporary cell-radio network temporary identity (temporary cell-radio network temporary identity, TC-RNTI).

A second group of channels include a PDCCH scrambled by a paging radio network temporary identity P-RNTI.

A third group of channels include a synchronization signal/physical broadcast channel block SSB. A cell in a dormant state is a cell to which a communication apparatus like the terminal cannot directly establish a communication connection. That the communication connection cannot be directly established includes not sending/receiving one or more of the following groups of channels: the foregoing first group of channels, the foregoing second group of channels, or the foregoing third group of channels.

7. Discovery reference signal (discovery reference signal, DRS): The discovery reference signal is a reference signal that has one or more functions of synchronization, channel measurement, cell discovery, cell access, or the like. The DRS may include a cell identity (PCI), or the DRS may further have a function of indicating a resource corresponding to system information.

For ease of understanding this application, a random access process is briefly described. The random access process is as follows:

The terminal device obtains, by using the SSB and the SIB, a resource for sending a random access sequence on a physical random access channel (physical random access channel, PRACH), and sends the PRACH.

If the network device successfully receives the PRACH and allows the terminal to access, the network device sends a RAR to the UE within a preconfigured random access response (random access response, RAR) window (window).

In addition, the UE monitors, in the preconfigured RAR window, downlink control information (downlink control information, DCI) transmitted on a physical downlink control channel (physical downlink control channel, PDCCH), where the DCI indicates the UE to obtain RAR information from a medium access control (medium access control, MAC) protocol data unit (protocol data unit, PDU) carried on a physical downlink shared channel (physical downlink shared channel, PDSCH).

After successfully obtaining the DCI through detection, the terminal receives the random access response RAR, and sends a physical uplink shared channel (physical uplink shared channel, PUSCH) based on a time-frequency resource indicated by an uplink grant UL grant in the random access response. Then, the network device sends the DCI to the terminal device, where the DCI indicates a time-frequency resource carrying a contention resolution message. The terminal device detects the DCI, and receives the contention resolution message. The terminal device establishes the connection to the network device by using a random access process.

With development of communication technologies, a network transmission bandwidth is increasingly large. Consequently, a transmit power of a network device is also increasingly large. In addition, an increase in transmission paths of the network device causes an increase in static power consumption of a system. Energy saving of the network device becomes a research focus.

A possible energy saving manner of the network device is multi-site shutdown. Network devices on the live network are divided into a data station and a control station. When the data station is normally started, the data station provides a data transmission service for a user. The control station provides basic access and control functions for users in an area. When overall network load is low, some data stations may enter a dormant state. When there is a data transmission requirement, the data stations may wake up from the dormant state and provide the data transmission service for the user.

In a multi-site shutdown scenario, a data station in a dormant state may maintain only basic synchronization signal sending, for example, send only a periodic SSB/DRS and do not send a SIB1. Alternatively, a data station in a dormant state may send no signal. In this way, the terminal cannot obtain all information required for downlink synchronization and subsequent random access. In other words, the terminal cannot directly establish a connection to the data station and complete cell search and an initial access process. This seriously affects communication between the terminal and the data station.

In view of this, an embodiment of this application provides an uplink wake-up method. According to the method, a cell in a dormant state can be woken up in time, so that the terminal device establishes the connection to the data station, and performs subsequent access and transmission services, to ensure communication reliability. The following describes the method with reference to FIG. 2.

FIG. 2 is a diagram of a wake-up method according to an embodiment of this application. The method includes the following steps.

S210: A terminal receives first information from a first cell.

The first information includes configuration information of a first resource, the first resource is used to send a first signal, and the first signal is used by the terminal to establish a connection to a second cell.

The first cell may be a cell of a control station, and the second cell may be a cell of a data station in a dormant state. After establishing the connection to the second cell, the terminal performs communication in the second cell. In other words, the first signal is used to wake up the second cell. Alternatively, the first signal is used to activate the second cell. In other words, the first signal is used to change a status of the second cell. In other words, the first signal is used to trigger the second cell to communicate with the terminal. For example, the first signal is used for switching of the second cell from a dormant state to an active state. Alternatively, that the second cell is woken up may be that the second cell sends fourth information to the terminal.

The first signal in this application is a wake-up signal (wake-up signal, WUS) or a random access channel RACH. When the first signal is a WUS, the terminal sends the WUS to the second cell, and a network device corresponding to the second cell may send a RACH to the terminal (that is, the fourth information is a RACH). When the first signal is a RACH, a network device in the second cell sends a RAR to the terminal (that is, the fourth information is a RAR).

In other words, that the terminal establishes the connection to the second cell includes: The network device corresponding to the second cell sends the fourth information to the terminal, where when the first signal is a WUS, the fourth information is system information; or when the first signal is a RACH, the fourth information is a random access response RAR.

The first resource includes a time-frequency resource, and correspondingly, the configuration information of the first resource includes time domain position information and frequency domain position information that are of the first resource. The time domain position information may be position information and duration of a start radio frame or a start slot. The frequency domain position information may be carrier frequency information and bandwidth information. It should be understood that the time-frequency position information herein is merely an example rather than a limitation.

Optionally, the first resource may further include a code domain resource. In other words, the first resource may be a code domain resource, for example, a sequence.

It should be further understood that the first information in this application may be downlink configuration information, or may be system information. Second information in this application may be system information.

S220: The terminal sends the first signal on the first resource.

For example, the first signal is a WUS. Optionally, the method 200 may further include the following step.

S230: The terminal sends a first random access signal to the second cell.

Correspondingly, the network device in the second cell receives the first random access signal.

When the first signal is a WUS, the first random access signal is a RACH. When the first signal is a RACH, the first random access signal is a SIB1. For a step after the first random access signal is received, refer to the foregoing descriptions about initial access. Details are not described herein again.

Optionally, after receiving the first signal, the network device corresponding to the second cell may send the fourth information and/or receive the first random access signal within a second time window, and may not send the fourth information and/or not receive the first random access signal outside a first time window (that is, continue to enter the dormant state). The fourth information indicates a resource of the first random access signal. The second time window may be predefined, or may be configured. For example, the first cell configures the second time window for the terminal. Specifically, the second cell may configure the first time window by using the first information.

The method is applicable to a multi-site shutdown scenario, namely, a data station (for example, the second cell) dormancy scenario. When the terminal is connected to a control station (for example, the first cell), the terminal may actively send an uplink signal to wake up a data station in a dormant state, so that the data station in a dormant state enters a normal working state. The terminal performs cell search and initial access on the data station. This enhances flexibility of a wake-up solution, and effectively reduces a communication latency.

It should be understood that the first cell and the second cell in this application may correspond to a same network device. For example, the first cell and the second cell correspond to a network device #A. In other words, the first cell and the second cell both are cells #A of the network device. Alternatively, the first cell and the second cell may respectively correspond to different network devices. For example, the first cell corresponds to a network device #A, and the second cell corresponds to a network device #B. In other words, the first cell is a cell of the network device #A, and the second cell is a cell of the network device #B. To briefly and clearly describe the solutions of this application, the following uses an example in which the first cell and the second cell respectively correspond to different network devices for detailed description.

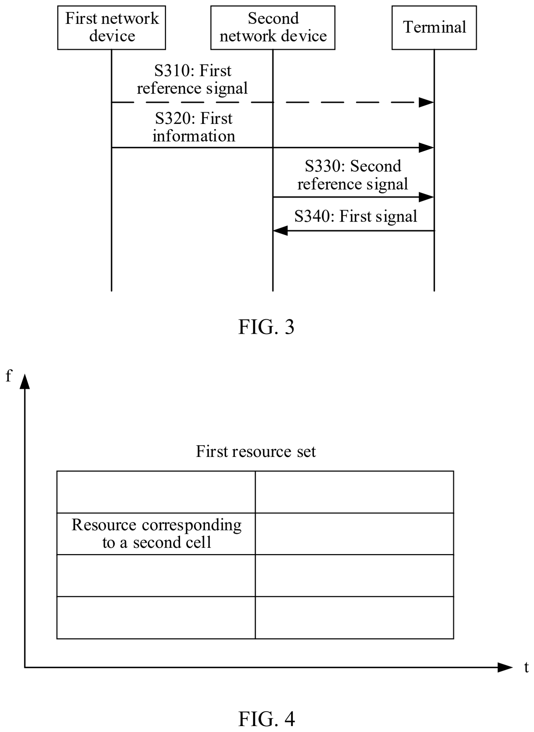

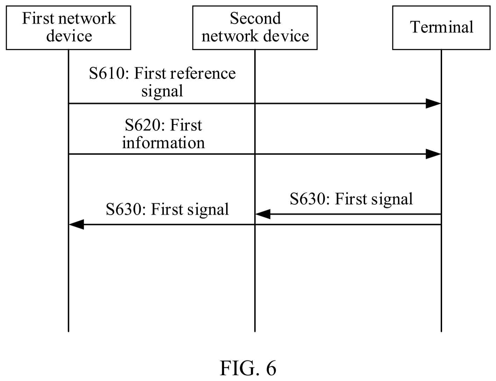

The following describes the method shown in FIG. 2 in detail with reference to FIG. 3 and FIG. 6.

FIG. 3 shows a wake-up method. In the method, a terminal may determine, based on a reference signal from a second cell, a resource for sending a first signal to the second cell.

Specifically, FIG. 3 includes the following steps.

Optionally, in S310, a first network device sends a first reference signal to the terminal. Correspondingly, the terminal receives the first reference signal.

Specifically, the first network device sends, in a first cell, the first reference signal to the terminal, in other words, the first network device and the terminal perform transmission of the first reference signal via the first cell. The first reference signal indicates a time-frequency resource for first information. The terminal may receive the first information on the time-frequency resource, and then obtain configuration information of a first resource by parsing the first information. Optionally, the first reference signal may be an SSB, or the first reference signal may be a discovery reference signal (namely, a DRS). For specific detection/receiving of the first reference signal, refer to the foregoing related descriptions of detection/receiving of the SSB. Details are not described herein again.

S320: The first network device sends the first information to the terminal. Correspondingly, the terminal receives the first information.

Specifically, the first network device sends, in the first cell, the first information to the terminal. For the first information, refer to the descriptions in S210. Details are not described herein again.

Optionally, the first resource may be one of a plurality of resources. The plurality of resources may belong to a first resource set. The plurality of resources are, for example, N resources, and the N resources are in one-to-one correspondence with N cells. The N cells include the second cell. The first resource is a resource that is in the N resources and that corresponds to the second cell. N is a positive integer greater than or equal to 1. In other words, the first resource may be determined from the plurality of resources.

For example, as shown in FIG. 4, a value of N is 8, and the resource corresponding to the second cell is one of the eight resources.

Time-frequency position information of the N resources may be configured by the first network device.

For example, the first network device indicates the time-frequency position information of the N resources to the terminal by using the first reference signal.

For another example, the first network device may alternatively indicate the time-frequency position information of the N resources jointly by using a plurality of reference signals. For example, the plurality of reference signals indicate a plurality of pieces of resource configuration information, and the plurality of pieces of resource configuration information indicate the time-frequency position information of the N resources.

Optionally, the first information may be a SIB1. The SIB1 may include the time-frequency position information of the N resources. For the two different cases, the following provides descriptions.

Case 1: The first cell indicates the time-frequency position information of the N resources by using the first information.

In this case, the terminal receives the first reference signal, and obtains the first information, for example, the SIB1, on the time-frequency resource indicated by the first reference signal. Further, the terminal may directly obtain the time-frequency position information of the N resources and indicated by the SIB1. The first resource is included. For a manner of determining the first resource, refer to the foregoing descriptions. Details are not described again.

Case 2: The first network device indicates, in the first cell, configuration information of the N resources by using L reference signals.

The configuration information of the N resources may indicate the time-frequency position information of the N resources. The N pieces of resource configuration information include resource configuration information of the first information, and the resource configuration information of the first information includes information about the time-frequency resource for the first information. In other words, the first information is one of the N pieces of resource configuration information.

L is a positive integer greater than 1.

The following two cases may be included.

Case A: The N pieces of resource configuration information indicate time-frequency position information of same resources.

For example, a network device in the first cell of the terminal sends the first reference signal and a third reference signal to the terminal, where the first reference signal indicates a second resource, and the second resource is the time-frequency resource for the first information, in other words, the second resource may be used for transmission of the first information. The first information includes the configuration information of the first resource. The third reference signal indicates a time-frequency resource (namely, a third resource) for third information, and the third information includes configuration information of a fourth resource. The configuration information of the first resource is the same as the configuration information of the fourth resource.

The fourth resource is used for transmission of a second signal, and the second signal and the first signal are of a same type.

It should be understood that the second signal and the first signal are of the same type. For example, the first signal is a wake-up signal, and the second signal is also a wake-up signal.

In other words, the fourth resource may be used for transmission of a wake-up signal. The wake-up signal may be the same as or different from the first signal. For example, the wake-up signal is used to wake up (or establish a connection to) another cell. This is not limited in this application. For the fourth resource described below, refer to the descriptions herein. Details are not described again.

For another example, a network device in the first cell of the terminal sends the first reference signal and a third reference signal to the terminal, where the first reference signal indicates a second resource, and the second resource is the time-frequency resource for the first information, in other words, the second resource may be used for transmission of the first information. The first information includes configuration information of S resources. The third reference signal indicates a time-frequency resource for third information, and the third information includes configuration information of R resources. The configuration information of the S resources is the same as the configuration information of the R resources.

The S resources may be the first resource set, the R resources may be a second resource set, and the first resource set is different from the second resource set. For example, the resources in the first resource set are not completely the same as the resources in the second resource set.

In other words, the first cell indicates a same resource by using resource configuration information corresponding to different reference signals.

Case B: The N pieces of resource configuration information respectively indicate time-frequency position information of different resources.

For example, a network device in the first cell sends the first reference signal and a third reference signal to the terminal, where the first reference signal indicates a second resource, and the second resource is the time-frequency resource for the first information, in other words, the second resource may be used for transmission of the first information. The first information includes the configuration information of the first resource. The third reference signal indicates a time-frequency resource for third information, and the third information includes configuration information of a fourth resource. The configuration information of the first resource is different from the configuration information of the fourth resource.

For another example, a network device in the first cell of the terminal sends the first reference signal and a third reference signal to the terminal, where the first reference signal indicates a second resource, and the second resource is the time-frequency resource for the first information, in other words, the second resource may be used for transmission of the first information. The first information includes configuration information of S resources. The third reference signal indicates a time-frequency resource for third information, and the third information includes configuration information of R resources. The configuration information of the S resources is different from the configuration information of the R resources.

For example, the reference signal is an SSB. It is assumed that there are a total of eight cells in a dormant state (in other words, a value of N is 8): a cell 1 to a cell 8, and resources of the cells in a dormant state respectively correspond to a resource 1 to a resource 8.

The first network device sends, in the first cell, four SSBs to the terminal: an SSB1 to an SSB4. Beam directions of the four SSBs are different. Resource configuration information corresponding to the SSB1 indicates the resource 1 and the resource 2, resource configuration information corresponding to the SSB2 indicates the resource 3 and the resource 4, resource configuration information corresponding to the SSB3 indicates the resource 5 and the resource 6, and resource configuration information corresponding to the SSB4 indicates the resource 7 and the resource 8. Alternatively, resource configuration information corresponding to the SSB1 indicates the resource 1 and the resource 2, resource configuration information corresponding to the SSB2 indicates the resource 2, the resource 3, and the resource 4, resource configuration information corresponding to the SSB3 indicates the resource 4, the resource 5, and the resource 6, and resource configuration information corresponding to the SSB4 indicates the resource 7 and the resource 8. In other words, the S resources may be the first resource set, the R resources may be a second resource set, and the first resource set is different from the second resource set. For example, the resources in the first resource set are not completely the same as the resources in the second resource set.

Specifically, that the first resource set is different from the second resource set may be that any resource in the first resource set is different from any resource in the second resource set, or may be that the resources in the first resource set are partially the same as and partially different from the resources in the second resource set.

In other words, that the first resource set is different from the second resource set may be: The resources included in the first resource set are not completely the same as the resources included in the second resource set, or the resources included in the first resource set are completely different from the resources included in the second resource set.

In other words, the first cell indicates different resources by using first information corresponding to different reference signals. "Different" herein may be completely different, or may be partially different.

In the foregoing different cases, the first reference signal is different from the third reference signal. For example, an index of the first reference signal is different from an index of the third reference signal. In other words, directions of transmit beams respectively corresponding to the first reference signal and the third reference signal respectively are different.

A plurality of manners in which the network device in the first cell of the terminal indicates, to the terminal, a time-frequency resource used for transmission of the first signal are provided herein. This improves indication flexibility. In addition, all cells in a dormant state in an area may be divided into a plurality of groups (where different groups may include a same cell) based on reference signals (beam directions). Based on this, system information corresponding to each reference signal may carry only configuration information of a cell in a corresponding beam direction. This reduces sending overheads of configuration information of the first cell.

S330: A second network device sends, in the second cell, a second reference signal to the terminal. Correspondingly, the terminal receives the second reference signal.

The second reference signal may include an identifier of the second cell.

In a possible manner, the terminal may determine the first resource from the plurality of resources based on the identifier of the second cell. In this manner, the N resources are in one-to-one correspondence with the N cells, in other words, there is a correspondence (or referred to as a mapping relationship) between the N resources and the N cells. After obtaining the identifier of the second cell, the terminal may determine, from the N resources based on the identifier and the correspondence, a resource corresponding to the identifier, that is, the first resource, in other words, the resource corresponding to the second cell.

It should be understood that a cell identity is merely used as an example of a manner in which a cell can be identified. This is not limited in this embodiment of this application. For example, the N cells may be alternatively sorted in a specific sequence, and then a corresponding sequence index is configured for each cell. In conclusion, all manners that can be used to distinguish between the N cells shall fall within the protection scope of this application.

It should be further understood that the correspondence between the N cells and the N resources may be predefined, or may be configured. For example, the correspondence may be configured via the first cell. For example, the network device in the first cell sends indication information to the terminal, where the indication information indicates a correspondence between N cell identities and the N resources. This is not limited in this embodiment of this application either.

Optionally, the identifier of the second cell may alternatively be sent by the first cell.

S340. The terminal sends, on the first resource, the first signal to the second cell. Correspondingly, the second network device receives, in the second cell, the first signal.

It should be understood that the first resource is a communication resource of the terminal in the first cell, or the first resource is a communication resource of the terminal in the second cell.

In other words, the terminal may send the first signal on the communication resource in the first cell, or the terminal may send, on the communication resource in the second cell, the first signal to the second cell.

Specifically, the terminal sends the first signal on the communication resource in the second cell, and the first signal is received by the second cell. For example, the terminal sends the first signal to the second cell, and correspondingly, the second cell receives the first signal.

Alternatively, the terminal sends the first signal on the communication resource in the first cell, the first signal is received by the first cell, and the second cell is woken up via the first cell.

For example, if the first cell and the second cell share a same network device, in this manner, the second cell may be directly woken up through internal scheduling of the network device, so that the second cell does not need to additionally monitor the first signal, and energy consumption of the second cell is further reduced. If the first cell and the second cell respectively correspond to the first network device and the second network device that are different from each other, the first network device may wake up the second cell by using higher layer signaling (in other words, through wired transmission of an upper-layer network), or may wake up the second cell via an interface (for example, an Xn interface) between the network devices, so that the second cell does not need to additionally monitor the first signal over an air interface, and energy consumption of the second cell is further reduced.

When the terminal sends the first signal:

(1) a reference signal received power RSRP of the first reference signal is less than or equal to a first threshold, the first reference signal indicates the second resource, the second resource is used for transmission of the first information, and the first reference signal is from the first cell;

(2) a first path loss is greater than a second path loss, the first path loss is obtained through measurement of the first reference signal, the second path loss is obtained through measurement of the second reference signal, the second reference signal includes second information, the second information includes the identifier of the second cell, and the second reference signal is from the second cell; or

(3) a first transmit power is greater than a second transmit power, the first transmit power is a PRACH transmit power value that is of the terminal and that corresponds to the first cell, and the second transmit power is a PRACH transmit power value that is of the terminal and that corresponds to the second cell.

In other words, when at least one of the foregoing three items is satisfied, the terminal sends the first signal. For example, before sending the first signal, the terminal may determine whether at least one of the foregoing three items is satisfied. The terminal sends the first signal only when at least one of the foregoing three items is satisfied. In this way, the terminal selects to establish a connection to the second cell only when a channel satisfies a specific condition (which is good), to improve communication quality/communication efficiency.

Further, a transmit power of the first signal may be a maximum transmit power of the terminal.

Alternatively, a transmit power of the first signal may satisfy the following formula:

$$P=\min\{P_{CMAX}, P1+PL+(N1-1)\Delta_{Step}\}$$

$P_{CMAX}$ is a maximum transmit power of the terminal.

P1 is a first preset power, where the first preset power is a target power that is of the first signal and that is expected by the second cell.

PL is the first path loss, and is obtained through measurement of the second reference signal, where the second reference signal is from the second cell.

N1 is a quantity of transmissions, where the quantity of transmissions is a quantity of times that the terminal sends the first signal, and the quantity of times that the terminal sends the first signal is less than or equal to a maximum value of the quantity of transmission. The maximum value of the quantity of transmissions may be predefined, or may be configured. For example, the first cell configures the maximum value of the quantity of transmissions for the terminal. Specifically, the first cell may configure the maximum value of the quantity of transmissions by using the first information.

$\Delta_{Step}$ is a first power ramp step. The first power ramp step may be predefined, or may be configured. For example, the first cell configures the first power ramp step for the terminal. Specifically, the first cell may configure the first power ramp step by using the first information. The first power ramp step is an increment at each power change. The terminal may further determine a first ramp power based on the quantity of transmissions minus one and the first power ramp step. For example, the first ramp power is a product of the quantity of transmissions minus one and the first power ramp step.

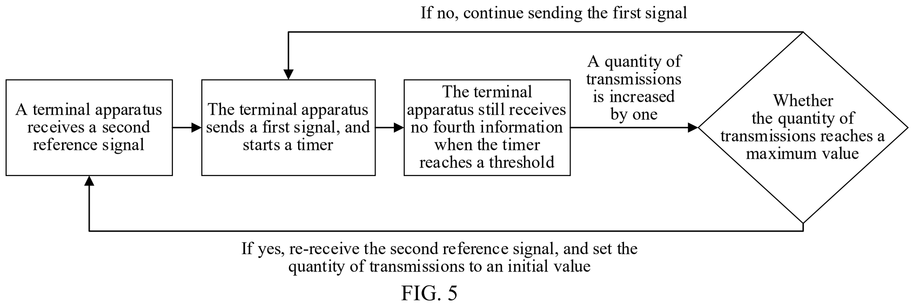

FIG. 5 is a schematic flowchart of sending a first signal by a terminal.

After sending the first signal, the terminal starts a timer. When the timer reaches a threshold and the terminal receives no fourth information, a quantity of transmissions is increased by one. The threshold of the timer may be predefined, or may be configured. For example, a first cell configures the threshold of the timer for the terminal. Specifically, the first cell may configure the threshold of the timer by using first information.

In this case, if the quantity of transmissions is equal to a maximum value, the terminal considers that sending of the first signal fails, re-receives a second reference signal, and sets the quantity of transmissions to an initial value (for example, 1). If the quantity of transmissions is not equal to a maximum value, the terminal resends the first signal. Optionally, a transmit power of the terminal may remain unchanged. Alternatively, the terminal may determine a new transmit power to resend the first signal. This is not limited in this application.

FIG. 6 shows another wake-up method. In the method, a terminal may determine a second cell when receiving no reference signal from the second cell, and further establish a connection to the second cell.

Specifically, FIG. 6 includes the following steps.

S610: A first network device sends, in a first cell, a first reference signal to the terminal. Correspondingly, the terminal receives the first reference signal.

For the first reference signal, refer to the descriptions in S310. Details are not described herein again.

S620: The first network device sends first information to the terminal. Correspondingly, the terminal receives the first information.

For the first information, refer to the descriptions in S210. Details are not described herein again. S630: The terminal sends a first signal on each of N resources. Correspondingly, one or more network devices corresponding to N cells receive the first signal.

A value of N in the figure is 2, and two cells respectively correspond to the first network device and a second network device.

For the first signal, refer to the descriptions in S340. Details are not described again.

In other words, when the first information includes configuration information of the N resources, and the terminal receives no second reference signal, the terminal may send the first signal on each of the N resources. Because the N resources are in one-to-one correspondence with the N cells, it is equivalent to that the terminal sends the first signal to each of the N cells.

After receiving the first signal, each cell may send a reference signal to the terminal. For example, network devices in M cells send reference signals to the terminal, and correspondingly, the terminal receives the M reference signals. The M cells include the second cell, and the second cell sends the second reference signal. For the second reference signal, refer to the descriptions in S330. In this way, when the terminal cannot determine the second cell or a resource corresponding to the second cell, an effect of waking up the second cell can also be implemented.

In a possible manner, in this case, the second cell may be determined by the terminal. In other words, the terminal determines a target cell to which a connection is to be established. The target cell is in the N cells.

For example, the second cell is a cell with a largest reference signal received power RSRP in the M cells. The terminal selects a cell with a largest RSRP, in other words, a cell with better signal received quality, to perform communication, so that communication reliability can be improved.

Alternatively, the second cell is a cell with a smallest path loss obtained through reference signal measurement in the M cells. The terminal selects a cell with a smallest path loss as the second cell, so that a loss in data transmission can be reduced, and communication efficiency can be improved. Alternatively, the second cell is a cell with a smallest corresponding random access transmit power in the M cells. The terminal communicates with a network device in the cell with a smallest random access transmit power, so that power consumption of the terminal can be reduced.

Alternatively, the second cell is a cell whose RSRP is greater than or equal to a second threshold in the M cells.

Alternatively, the second cell is a cell corresponding to a reference signal first received by the terminal. The M cells are cells in the N cells. It should be understood that a speed of receiving the reference signal can reflect communication quality of a corresponding cell. In other words, the cell corresponding to the reference signal first received by the terminal may be considered as a cell with best communication quality. The terminal establishes communication with a network device in the cell, so that communication efficiency can be improved.

The terminal sends the first signal to the N cells, but not all of the N cells send a reference signal to the terminal. Therefore, M may be less than or equal to N. When M is equal to N, each of the N cells sends the reference signal to the terminal.

In a possible implementation, the M cells may be cells corresponding to reference signals received by the terminal within a first time window. The first time window may be predefined, or may be configured. For example, the first cell configures the first time window for the terminal. Specifically, the first cell may configure the first time window by using the first information. Setting a time window may prevent the terminal from waiting for the reference signal of each cell indefinitely, so that a waste of resources is avoided, and the communication efficiency can be improved.

The second threshold may be predefined, or may be configured. For example, the second threshold may be configured by the first cell for the terminal. In a possible implementation, when there is more than one cell whose RSRP is greater than or equal to the second threshold in the M cells, the terminal may select a cell with a largest RSRP as the second cell. It should be understood that, that the second cell is a cell whose RSRP is greater than or equal to the second threshold in the M cells is merely an example rather than a limitation for determining the second cell. For example, the second cell may alternatively be a cell whose RSRP is greater than the second threshold in the M cells.

The terminal sends the first signal when the terminal receives no second reference signal before sending the first signal, or when one or more of the following conditions are not satisfied:

(1) A reference signal received power RSRP of the first reference signal is less than or equal to a first threshold;

(2) a first path loss is greater than a third path loss, the first path loss is obtained through measurement of the first reference signal, and the third path loss is obtained through measurement of a reference signal that arrives within the first time window; or

(3) a first transmit power is greater than a third transmit power, the first transmit power is a PRACH transmit power value that is of the terminal and that corresponds to the first cell, and the third transmit power is a PRACH transmit power value obtained by the terminal through measurement based on a reference signal that arrives within the first time window.

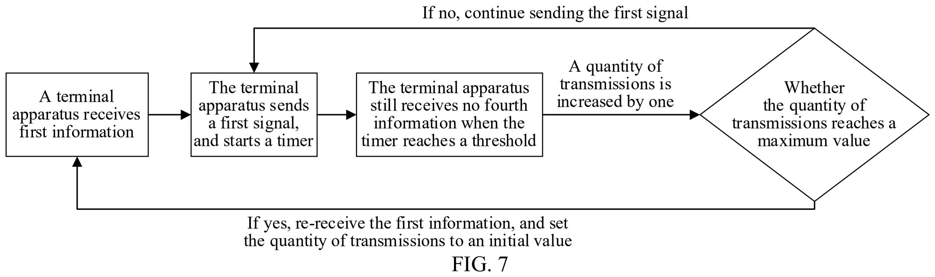

FIG. 7 is another schematic flowchart of sending a first signal by a terminal.

After sending the first signal, the terminal starts a timer. When the timer reaches a threshold and the terminal receives no reference signal, or when one or more of the foregoing conditions are not satisfied, a quantity of transmissions is increased by one.

In this case, if the quantity of transmissions reaches a maximum value, the terminal considers that sending of the first signal fails, re-receives a first reference signal and/or first information, and sets the quantity of transmissions to an initial value (for example, 1). If the quantity of transmissions does not reach a maximum value, the terminal resends the first signal.

For a power for sending the first signal by the terminal, refer to the descriptions in S340. Details are not described again.

It should be understood that the first reference signal in this application is a synchronization signal block SSB or a discovery reference signal DRS. A second reference signal is a synchronization signal block SSB or a discovery reference signal DRS.

To enable a reader to clearly understand implementation of the solutions in this application, the following provides two possible examples of a communication interaction process.

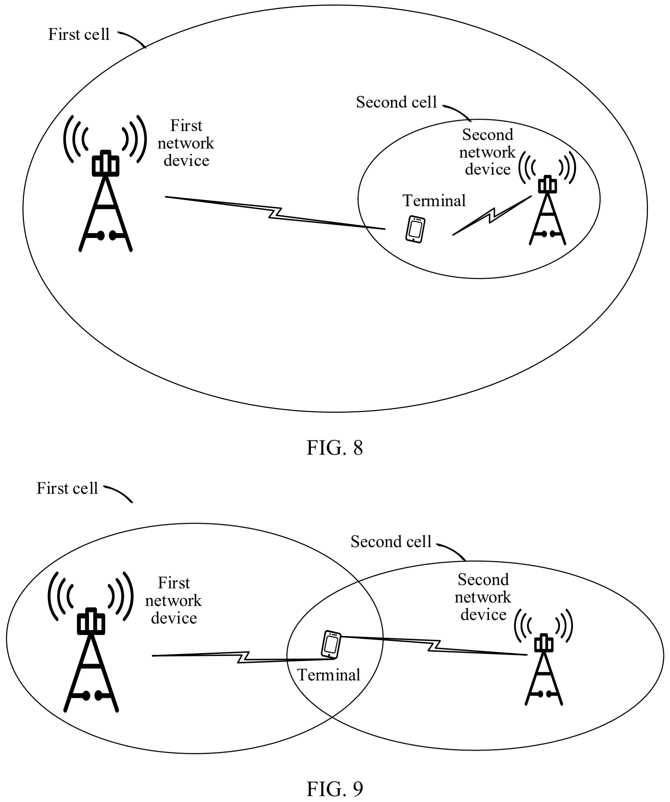

FIG. 8 and FIG. 9 are two diagrams of a possible relationship between a first cell and a second cell.

In FIG. 8, a first network device corresponding to the first cell is a control station, and a network device corresponding to the second cell is a data station. A coverage area of the first network device includes a coverage area of the second network device.

In FIG. 9, a coverage area of the first cell and a coverage area of the second cell partially overlap, and a terminal is located in an overlapping range.

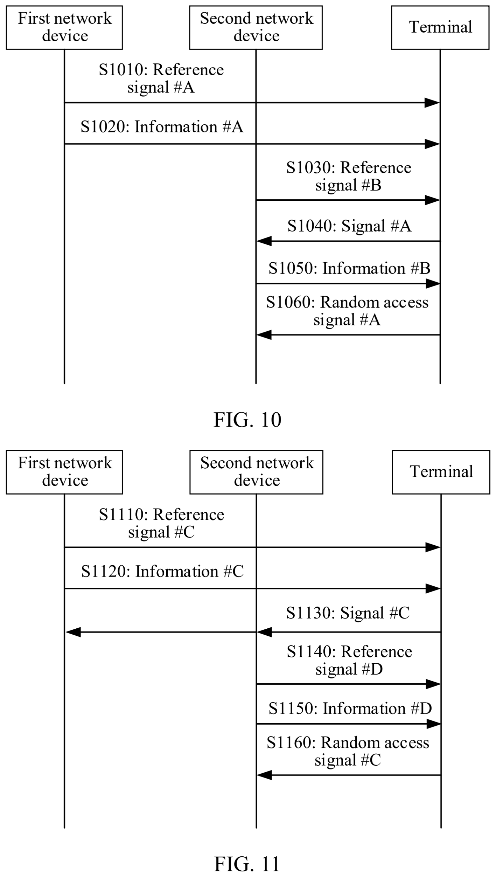

FIG. 10 is a schematic flowchart of a wake-up method.

S1010: A first network device sends, in a first cell, a reference signal #A to a terminal. Correspondingly, the terminal receives the reference signal #A.

The reference signal #A may indicate a time-frequency resource for information #A. Specifically, for the reference signal #A, refer to the descriptions of the first reference signal in S320. Details are not described herein again.

S1020: The first network device sends, in the first cell, the information #A to the terminal. Correspondingly, the terminal receives the information #A.

The information #A indicates a resource #A, and the resource #A may be used for transmission of a signal #A. For example, the information #A may be system information, or may be downlink configuration information. This is not limited in this embodiment of this application.

Specifically, for the information #A, refer to the descriptions of the first information in S210, and for the resource #A, refer to the descriptions of the first resource in S210. Details are not described again.

S1030: A second network device sends, in a second cell, a reference signal #B to the terminal. Correspondingly, the terminal receives the reference signal #B.

The reference signal #B indicates an identifier of the second cell. The terminal may determine the resource #A based on the identifier of the second cell. For example, when the information #A indicates a plurality of resources, the terminal may determine the resource #A from the plurality of resources based on the identifier of the second cell.

The reference signal #B further indicates a time-frequency resource for information #B.

Specifically, for the reference signal #B, refer to the descriptions of the second reference signal in S330. Details are not described herein again.

S1040: The terminal sends the signal #A to the second network device. Correspondingly, the second network device receives the signal #A.

The signal #A is used by the terminal to establish a connection to the second cell. In other words, the signal #A is used by the terminal to wake up the second cell. For example, the signal #A is used to trigger the second cell to send the system information to the terminal. For example, the signal #A may be a WUS. Specifically, for the signal #A, refer to the descriptions of the first signal in S210. Details are not described herein again.

It should be understood that the terminal sends, on the resource #A, the signal #A to the second cell. Specifically, the terminal sends, on the resource #A, the signal #A to the second network device corresponding to the second cell.

For a manner, a power, and the like of sending the signal #A by the terminal, refer to the descriptions in S220. Details are not described again.

S1050: The second network device sends, in the second cell, the information #B to the terminal. Correspondingly, the terminal receives the information #B.

The information #B indicates a time-frequency resource of a random access signal. Specifically, for the signal #B, refer to the descriptions of the fourth information in S230. Details are not described herein again.

S1060: The terminal sends a random access signal #A to the second network device. Correspondingly, the second network device receives the random access signal #A.

The random access signal #A is used in a random access process between the terminal and the second cell. For details about the access process, refer to the foregoing descriptions.

In this implementation process, the terminal determines the identifier of the second cell based on a reference signal sent by the second cell, further determines the resource #A, and sends a wake-up signal to the second cell. This reduces complexity of determining the resource #A by the terminal, and further reduces a latency.

FIG. 11 is a schematic flowchart of a communication method.

S1110: A first network device sends, in a first cell, a reference signal #C to a terminal. Correspondingly, the terminal receives the reference signal #C.

The reference signal #C may indicate a time-frequency resource for information #C. Specifically, for the reference signal #C, refer to the descriptions of the first reference signal in S320. Details are not described herein again.

S1120: The first network device sends, in the first cell, the information #C to the terminal. Correspondingly, the terminal receives the information #C.

The information #C indicates a resource #C, and the resource #C may be used for transmission of a signal #C. For example, the information #C may be system information, or may be downlink configuration information. This is not limited in this embodiment of this application. Specifically, for the information #C, refer to the descriptions of the first information in S210. The resource #C may be N resources. For example, refer to the descriptions of the N resources in S320. Details are not described again.

S1130: The terminal sends the signal #C to each of N cells. Correspondingly, each of the N cells receives the signal #C.

The N cells are in one-to-one correspondence with the N resources in S1120. A value of N in the figure is 2. In other words, the N cells are the first cell and a second cell. Specifically, the terminal separately sends the signal #C to network devices corresponding to the N cells, for example, the first network device and a second network device.

The signal #C is used by the terminal to establish a connection to the second cell.

In other words, the signal #C is used by the terminal to wake up the second cell. For example, the signal #C is used to trigger the second cell to send the system information to the terminal. For example, the signal #C may be a WUS.

Specifically, for the signal #C, refer to the descriptions of the first signal in S210. Details are not described herein again. The second cell belongs to the N cells.

It should be understood that the terminal sends, on the N resources, the signal #C to the N cells. For a manner, a power, and the like of sending the signal #C by the terminal, refer to the descriptions in S630. Details are not described again.

S1140: Network devices corresponding to M cells send reference signals to the terminal. Correspondingly, the terminal receives the reference signals.

It should be understood that after the terminal sends the signal #C to the N cells, the M cells in the N cells may separately send the reference signal to the terminal. Correspondingly, the terminal receives the M reference signals. In FIG. 11, a value of M is 2. To be specific, network devices corresponding to the M cells are respectively the first network device and the second network device.

It should be understood that M is less than or equal to N. To be specific, each of the N cells may send the reference signal to the terminal.

Alternatively, some of the N cells send the reference signal to the terminal.

The terminal may measure each reference signal to obtain an RSRP, so as to determine the second cell. For example, the second cell may be a cell with a largest RSRP in the M cells. A reference signal sent by the second cell is a reference signal #D.

Specifically, for a manner in which the terminal determines the second cell, refer to the descriptions in S630.

The reference signal #D may indicate an identifier of the second cell, and may further indicate a time-frequency resource for information #D. Specifically, for the reference signal #D, refer to the descriptions of the second reference signal in S630. Details are not described herein again.

S1150: The second network device sends, in the second cell, the information #D to the terminal. Correspondingly, the terminal receives the information #D.

The information #D indicates a time-frequency resource of a random access signal. Specifically, for the signal #D, refer to the descriptions of the fourth information in S230. Details are not described herein again.

S1160: The terminal sends a random access signal #C to the second network device. Correspondingly, the second network device receives the random access signal #C.

The random access signal #C is used in a random access process between the terminal and the second cell. For details about the access process, refer to the foregoing descriptions.

This procedure provides a manner of determining the second cell when the terminal receives no second reference signal, avoiding failure of the terminal to perform random access when the terminal cannot determine the second cell. This improves communication reliability and reduces a random access latency of the terminal.

It may be understood that, to implement the functions in the foregoing embodiments, the network device and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a specific function is performed by using hardware or hardware driven by computer software depends on particular application scenarios and design constraint conditions of the technical solutions.

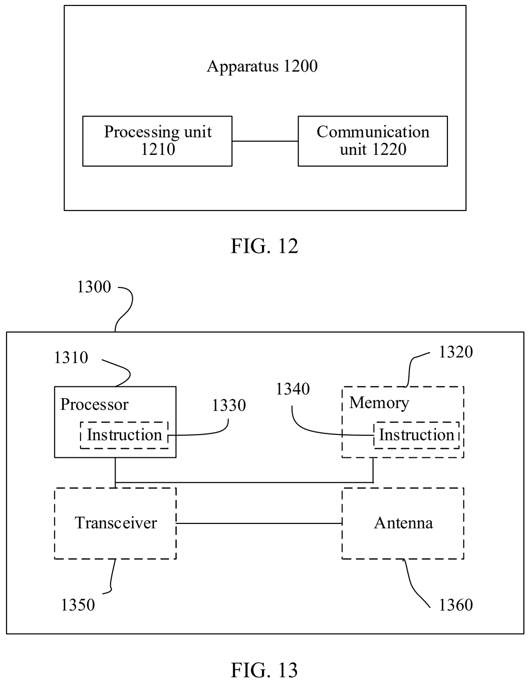

FIG. 12 and FIG. 13 are diagrams of structures of possible communication apparatuses according to embodiments of this application. These communication apparatuses may be configured to implement a function of the terminal or the network device in the foregoing method embodiments, and therefore can also implement beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 12, a communication apparatus 1200 includes a processing unit 1210 and a transceiver unit 1220. The communication apparatus 1200 is configured to implement a function of the terminal or the network device in the method embodiment shown in FIG. 2, FIG. 3, FIG. 6, FIG. 10, or FIG. 11.

When the communication apparatus 1200 is configured to implement the function of the terminal in the method embodiment shown in FIG. 3:

the transceiver unit 1220 is configured to receive first information from a first cell, where the first information includes configuration information of a first resource, the first resource is used to send a first signal, and the first signal is used by the terminal to establish a connection to a second cell;

the processing unit 1210 is configured to parse the first information, to obtain information indicated or carried by the first information, for example, the configuration information of the first resource;

the transceiver unit 1220 is further configured to send the first signal on the first resource;

the transceiver unit 1220 is further configured to receive a first reference signal, where the first reference signal indicates a second resource, the second resource is used for transmission of the first information, and the first reference signal is from the first cell;

the processing unit 1210 is configured to parse information indicated or carried by the first reference signal, for example, obtain information about a time-frequency resource indicated by the first reference signal;

the transceiver unit 1220 is further configured to receive a second reference signal from the second cell, where the second reference signal includes an identifier of the second cell;

the processing unit 1210 is configured to determine the first resource from a first resource set based on the identifier of the second cell; and

the transceiver unit 1220 is further configured to receive a third reference signal from the first cell, where the third reference signal indicates a third resource, the third resource is used for transmission of third information, the third information includes configuration information of a fourth resource, the fourth resource is used for transmission of a second signal, and the second signal and the first signal are of a same type.

When the communication apparatus 1200 is configured to implement the function of the terminal in the method embodiment shown in FIG. 6:

the transceiver unit 1220 is configured to receive first information from a first cell, where the first information includes configuration information of a first resource, the first resource is used to send a first signal, and the first signal is used by the terminal to establish a connection to a second cell;

the processing unit 1210 is configured to parse the first information, to obtain information indicated or carried by the first information, for example, the configuration information of the first resource;

the transceiver unit 1220 is further configured to send the first signal on the first resource;

the transceiver unit 1220 is further configured to receive a first reference signal, where the first reference signal indicates a second resource, the second resource is used for transmission of the first information, and the first reference signal is from the first cell;

the processing unit 1210 is configured to parse information indicated or carried by the first reference signal, for example, obtain information about a time-frequency resource indicated by the first reference signal;

the transceiver unit 1220 is further configured to send the first signal on each of N resources, where the N resources include the first resource, and the N resources are in one-to-one correspondence with N cells;

the transceiver unit 1220 is further configured to receive M reference signals, where the M reference signals include a second reference signal, the second reference signal an identifier of the second cell, and the second reference signal is from the second cell; and

the transceiver unit 1220 is further configured to receive a third reference signal from the first cell, where the third reference signal indicates a third resource, the third resource is used for transmission of third information, the third information includes configuration information of a fourth resource, the fourth resource is used for transmission of a second signal, and the second signal and the first signal are of a same type.

When the communication apparatus 1200 is configured to implement the function of the network device (for example, the network device corresponding to the first cell, that is, the first network device) in the method embodiment shown in FIG. 6:

the processing unit 1210 is configured to determine a first resource, and the transceiver unit 1220 is configured to send first information, where the first information includes configuration information of the first resource, the first resource is used to send a first signal, and the first signal is used by the terminal to establish a connection to a second cell;

the transceiver unit 1220 is further configured to send a first reference signal to the terminal, where the first reference signal indicates a second resource, and the second resource is used for transmission of the first information; and

the transceiver unit 1220 is further configured to send a third reference signal to the terminal, where the third reference signal indicates a third resource, the third resource is used for transmission of third information, the third information includes configuration information of a fourth resource, the fourth resource is used for transmission of a second signal, and the second signal and the first signal are of a same type.

When the communication apparatus 1200 is configured to implement the function of the network device (for example, the network device corresponding to the second cell, that is, the second network device) in the method embodiment shown in FIG. 6:

the transceiver unit 1220 is configured to: send second information, where the second information includes an identifier of the second cell, and the identifier of the second cell indicates a first resource; and receive a first signal on the first resource; and

the processing unit 1210 is configured to establish a connection to the terminal based on the first signal; or

the transceiver unit 1220 is configured to send a second reference signal, where the second reference signal includes an identifier of the second cell; and

the transceiver unit 1220 is further configured to send fourth information to the terminal, where when the first signal is a WUS, the fourth information is system information; or when the first signal is a RACH, the fourth information is a random access response RAR.

For more detailed descriptions of the processing unit 1210 and the transceiver unit 1220, refer to related descriptions in the method embodiment shown in FIG. 2, FIG. 3, FIG. 6, FIG. 10, or FIG. 11.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to: store instructions to be executed by the processor 1310, store input data needed by the processor 1310 to run the instructions, or store data generated after the processor 1310 runs the instructions. When the communication apparatus 1300 is configured to implement the method shown in FIG. 2, FIG. 3, or FIG. 6, the processor 1310 is configured to implement a function of the processing unit 1210, and the interface circuit 1320 is configured to implement a function of the transceiver unit 1220.

When the communication apparatus is a chip used in a terminal, the chip in the terminal implements a function of the terminal in the foregoing method embodiments. The chip in the terminal receives, via another module (for example, a radio frequency module or an antenna) in the terminal, sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip of the base station, may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the base station or the terminal. The processor and the storage medium may alternatively exist in the base station or the terminal as discrete components.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus.

The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A wake-up method, comprising:

    receiving first information from a first cell, wherein the first information comprises configuration information of a first resource, the first resource is used to send a first signal, and the first signal is used by a terminal to establish a connection to a second cell; and
    sending the first signal on the first resource.

2. The method according to claim 1, wherein the first information comprises configuration information of a resource in a first resource set, the first resource set comprises N resources, the N resources are in one-to-one correspondence with the N cells, the N cells comprise the second cell, the first resource is a resource that is in the first resource set and that corresponds to the second cell, and N is a positive integer greater than or equal to 1.

3. The method according to claim 2, wherein the method further comprises:

    receiving second information from the second cell, wherein the second information comprises an identifier of the second cell; and
    determining the first resource from the first resource set based on the identifier of the second cell.

4. The method according to any one of claims 1 to 3, wherein a reference signal received power RSRP of a first reference signal is less than or equal to a first threshold, the first reference signal indicates a second resource, the second resource is used for transmission of the first information, and the first reference signal is from the first cell; or

    a first path loss is greater than a second path loss, the first path loss is obtained through measurement of a first reference signal, the second path loss is obtained through measurement of a second reference signal, and the second reference signal is from the second cell; or
    a first transmit power is greater than a second transmit power, the first transmit power is a PRACH transmit power value that is of the terminal corresponding to the first cell, and the second transmit power is a PRACH transmit power value that is of the terminal corresponding to the second cell.

5. The method according to any one of claims 2 to 4, wherein sending the first signal on the first resource comprises:
sending the first signal on each of the N resources, wherein the N resources comprise the first resource, and the N resources are in one-to-one correspondence with the N cells.

6. The method according to claim 5, wherein the method further comprises:

    receiving M reference signals from M cells, wherein the M reference signals comprise the second reference signal, the second reference signal comprises the identifier of the second cell, and the second reference signal is from the second cell, wherein
    the second cell satisfies at least one of the following:
    the second cell is a cell with a largest reference signal received power RSRP in the M cells; or
    the second cell is a cell with a smallest path loss obtained through reference signal measurement in the M cells; or the second cell is a cell with a smallest corresponding random access transmit power in the M cells; or the second cell is a cell whose RSRP is greater than or equal to a second threshold in the M cells; or the second cell is a cell corresponding to a reference signal first received by the terminal, wherein the M cells are cells in the N cells.

7. The method according to any one of claims 1 to 6, wherein the method further comprises:

receiving a first reference signal from the first cell, wherein the first reference signal indicates a second resource, and the second resource is used for transmission of the first information; and

receiving a third reference signal from the first cell, wherein the third reference signal indicates a third resource, the third resource is used for transmission of the third information, the third information comprises configuration information of a fourth resource, the fourth resource is used for transmission of a second signal, and the second signal and the first signal are of a same type, wherein

an index of the third reference signal is different from an index of the first reference signal, and the first resource is the same as or different from the fourth resource.

8. The method according to claim 7, wherein the first resource belongs to the first resource set, the fourth resource belongs to a second resource set, and the first resource set is the same as or different from the second resource set.

9. The method according to any one of claims 1 to 8, wherein

a transmit power of the first signal is a maximum transmit power of the terminal;

or

a transmit power of the first signal satisfies the following formula:

$$P=\min\{P_{CMAX}, P_I+PL+(N_I-1)\Delta_{Step}\},$$

wherein

$P_{CMAX}$ is a maximum transmit power of the terminal;

$P_1$ is a first preset power, wherein the first preset power is a target power of the first signal that is expected by the second cell;

$PL$ is the first path loss, and is obtained through measurement of the second reference signal, wherein the second reference signal is from the second cell;

$N_1$ is a quantity of transmissions, and the quantity of transmissions is a quantity of times that the terminal sends the first signal; and

$\Delta_{Step}$ is a first power ramp step, and the first power ramp step is an increment at each power change.

10. The method according to any one of claims 4 to 9, wherein the first reference signal is a synchronization signal block SSB or a discovery reference signal DRS.

11. The method according to any one of claims 3 to 10, wherein that the first signal is used by the terminal to establish the connection to the second cell comprises:

the first signal is used to trigger the second cell to send fourth information, wherein

when the first signal is a wake-up signal WUS, the fourth information is a system information block SIB1;

or

when the first signal is a random access channel RACH, the fourth information is a random access response RAR.

12. The method according to any one of claims 1 to 11, wherein the first resource is a communication resource of the terminal in the first cell, or the first resource is a communication resource of the terminal in the second cell.

13. A wake-up method, comprising:
sending, in a first cell, first information to a terminal, wherein the first information comprises configuration information of a first resource, the first resource is used to send a first signal, and the first signal is used by a terminal to establish a connection to a second cell.

14. The method according to claim 13, wherein the first information comprises configuration information of a resource in a first resource set, the first resource set comprises N resources, the N resources are in one-to-one correspondence with the N cells, the N cells comprise the second cell, the first resource is a resource that is in the first resource set and that corresponds to the second cell, and N is a positive integer greater than or equal to 1.

15. The method according to claim 13 or 14, wherein the method further comprises:

sending a first reference signal to a terminal, wherein the first reference signal indicates a second resource, and the second resource is used for transmission of the first information; and

sending a third reference signal to a terminal, wherein the third reference signal indicates a third resource, the third resource is used for transmission of the third information, the third information comprises configuration information of a fourth resource, the fourth resource is used for transmission of a second signal, and the second signal and the first signal are of a same type, wherein

an index of the third reference signal is different from an index of the first reference signal, and the first resource is the same as or different from the fourth resource.

16. The method according to any one of claims 13 to 15, wherein the first resource belongs to the first resource set, the fourth resource belongs to a second resource set, and the first resource set is the same as or different from the second resource set.

17. The method according to any one of claims 13 to 16, wherein the first reference signal is a synchronization signal block SSB or a discovery reference signal DRS.

18. The method according to any one of claims 13 to 17, wherein the first resource is a communication resource of the terminal in the first cell, or the first resource is a communication resource of the terminal in the second cell.

19. The method according to any one of claims 13 to 18, wherein the first signal is a wake-up signal WUS or a random access channel RACH.

20. A wake-up method, comprising:

   receiving a first signal on a first resource; and establishing a connection to a terminal based on the first signal.

21. The method according to claim 20, wherein the method further comprises:
sending second information, wherein the second information comprises an identifier of the second cell.

22. The method according to claim 21, wherein the second information is a second reference signal.

23. The method according to any one of claims 20 to 22, wherein the first signal is a wake-up signal WUS or a random access channel RACH, and establishing the connection to the terminal based on the first signal comprises:

   sending the fourth information to the terminal, wherein
   when the first signal is a WUS, the fourth information is a system information block SIB1; or when the first signal is a RACH, the fourth information is a random access response RAR.

24. A communication apparatus, comprising at least one processor and an interface circuit, wherein the interface circuit is configured to: receive a signal from a communication apparatus other than the communication apparatus and transmit the signal to the processor, or send a signal from the at least one processor to a communication apparatus other than the communication apparatus; and the at least one processor is configured to implement the method according to any one of claims 1 to 12, claims 13 to 19, or claims 20 to 23 by using a logic circuit or by executing code instructions.

25. A computer-readable storage medium, wherein the computer-readable storage medium stores instructions, and when the instructions are run, the method according to any one of claims 1 to 12, claims 13 to 19, or claims 20 to 23 is implemented.

26. A computer program product, wherein the computer program product comprises a computer program, and when the computer program is run, the method according to any one of claims 1 to 12, claims 13 to 19, or claims 20 to 23 is performed.

FIG. 1

S210: A terminal receives first information from a first cell

S220: The terminal sends a first signal on a first resource

S230: The terminal sends a first random access signal to a second cell

FIG. 2

```
First network          Second              Terminal
   device          network device

        S310: First
      reference signal

        S320: First
        information

                       S330: Second
                      reference signal

                      S340: First signal
```

FIG. 3

First resource set

| | |
|---|---|
| Resource corresponding to a second cell | |
| | |
| | |

FIG. 4

If no, continue sending the first signal

A terminal apparatus receives a second reference signal → The terminal apparatus sends a first signal, and starts a timer → The terminal apparatus still receives no fourth information when the timer reaches a threshold

A quantity of transmissions is increased by one →

Whether the quantity of transmissions reaches a maximum value

If yes, re-receive the second reference signal, and set the quantity of transmissions to an initial value

FIG. 5

FIG. 6

EP 4 654 734 A1

If no, continue sending the first signal

```
┌─────────────┐     ┌─────────────┐     ┌──────────────────┐                        ╱╲
│ A terminal  │     │ The terminal│     │ The terminal     │  A quantity of        ╱    ╲
│ apparatus   │ ──▶ │ apparatus   │ ──▶ │ apparatus        │  transmissions is    ╱Whether╲
│ receives    │     │ sends       │     │ still receives   │  increased by one   ╱ the quantity╲
│ first       │     │ a first     │     │ no fourth        │ ─────────────────▶ ╲ of          ╱
│ information │     │ signal,     │     │ information when │                     ╲transmissions╱
│             │     │ and starts a│     │ the timer reaches│                      ╲reaches a   ╱
└─────────────┘     │ timer       │     │ a threshold      │                       ╲maximum    ╱
                    └─────────────┘     └──────────────────┘                        ╲value   ╱
                                                                                      ╲    ╱
                                                                                       ╲╱
```

If yes, re-receive the first information, and set
the quantity of transmissions to an initial value

FIG. 7

FIG. 8

FIG. 9

| First network device | Second network device | Terminal |
|---|---|---|

S1010: Reference signal #A

S1020: Information #A

S1030: Reference signal #B

S1040: Signal #A

S1050: Information #B

S1060: Random access signal #A

FIG. 10

| First network device | Second network device | Terminal |
|---|---|---|

S1110: Reference signal #C

S1120: Information #C

S1130: Signal #C

S1140: Reference signal #D

S1150: Information #D

S1160: Random access signal #C

FIG. 11

Apparatus 1200

Processing unit 1210 — Communication unit 1220

FIG. 12

1300

1310

1320

Processor

1330

1340

Memory

Instruction

Instruction

Transceiver

Antenna

1350

1360

FIG. 13

# INTERNATIONAL SEARCH REPORT

| International application No. |
| --- |
| **PCT/CN2024/073851** |

| A. | CLASSIFICATION OF SUBJECT MATTER |
| --- | --- |

H04W 76/10(2018.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 资源, 时频, 时域, 频域, 配置, 唤醒, 第二, 第一, 另一, 其他, 其它, 邻居, 邻区, 相邻, 基站, 小区, 消息, 信息, resource, RB, RE, slot, configur+, first, neighbor, neighbour, other, second, another, cell, enb, wakeup , WUS, SIB

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115379534 A (HUAWEI TECHNOLOGIES CO., LTD.) 22 November 2022 (2022-11-22) description, paragraphs [0441]-[0982] | 1-3, 11-14, 18-26 |
| A | CN 102421172 A (ALCATEL-LUCENT SHANGHAI BELL CO., LTD.) 18 April 2012 (2012-04-18) entire document | 1-26 |
| A | CN 111148191 A (SPREADTRUM COMMUNICATIONS (SHANGHAI) CO., LTD.) 12 May 2020 (2020-05-12) entire document | 1-26 |
| A | CN 114467349 A (QUALCOMM INC.) 10 May 2022 (2022-05-10) entire document | 1-26 |
| A | WO 2019075315 A1 (QUALCOMM INC.) 18 April 2019 (2019-04-18) entire document | 1-26 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 April 2024** | **23 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 654 734 A1

## INTERNATIONAL SEARCH REPORT
### Information on patent family members

International application No.

**PCT/CN2024/073851**

| Patent document cited in search report | | | Publication date (day/month/year) | Patent family member(s) | | | Publication date (day/month/year) |
|---|---|---|---|---|---|---|---|
| CN | 115379534 | A | 22 November 2022 | None | | | |
| CN | 102421172 | A | 18 April 2012 | KR | 20130069827 | A | 26 June 2013 |
| | | | | WO | 2012042375 | A2 | 05 April 2012 |
| | | | | WO | 2012042375 | A3 | 12 July 2012 |
| | | | | JP | 2013540392 | A | 31 October 2013 |
| | | | | JP | 5579328 | B2 | 27 August 2014 |
| | | | | EP | 2622936 | A2 | 07 August 2013 |
| | | | | US | 2013189932 | A1 | 25 July 2013 |
| CN | 111148191 | A | 12 May 2020 | US | 2021400585 | A1 | 23 December 2021 |
| | | | | WO | 2020088257 | A1 | 07 May 2020 |
| | | | | EP | 3876609 | A1 | 08 September 2021 |
| | | | | EP | 3876609 | A4 | 22 December 2021 |
| CN | 114467349 | A | 10 May 2022 | EP | 4038984 | A1 | 10 August 2022 |
| | | | | US | 2021105715 | A1 | 08 April 2021 |
| | | | | US | 11716686 | B2 | 01 August 2023 |
| | | | | WO | 2021068001 | A1 | 08 April 2021 |
| WO | 2019075315 | A1 | 18 April 2019 | EP | 3695556 | A1 | 19 August 2020 |
| | | | | EP | 3695556 | B1 | 22 November 2023 |
| | | | | US | 2019116585 | A1 | 18 April 2019 |
| | | | | US | 10674498 | B2 | 02 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310148834